# EUROPEAN PATENT SPECIFICATION

(11) **EP 4 344 997 B1**
(45) Date of publication and mention of the grant of the patent: **20.11.2024**
(21) Application number: 22198874.4
(22) Date of filing: 29.09.2022
(51) Int. Cl.: B64C 1/40

(54) **MULITFUNCTIONAL THERMAL AND ACOUSTIC INSULATION SYSTEM FOR AN AIRCRAFT**
MULTIFUNKTIONALES WÄRME- UND SCHALLDÄMMUNGSSYSTEM FÜR EIN FLUGZEUG
SYSTÈME D'ISOLATION THERMIQUE ET ACOUSTIQUE MULTIFONCTION POUR AÉRONEF

(43) Date of publication of application: 03.04.2024
(73) Proprietor: Airbus Operations GmbH, 21129 Hamburg (DE); Airbus S.A.S., 31707 Blagnac Cedex (FR)
(72) Inventor: Bonaccurso, Elmar, 82024 Taufkirchen (DE); Thomas, Christian, 21129 Hamburg (DE); Friedberger, Alois, 82024 Taufkirchen (DE); Machunze, Wolfgang, 82024 Taufkirchen (DE); Helwig, Andreas, 82024 Taufkirchen (DE); Witte, Tassilo, 21129 Hamburg (DE)
(74) Representative: Schicker, Silvia

(56) References cited:
- EP-A1- 3 696 082
- FR-A1- 2 918 780
- JP-A- 2005 003 777
- US-A1- 2011 211 721

## Description

The present invention relates to the field of thermal and acoustic insulation for an aircraft, such as a passenger aircraft or a helicopter.

In particular, the invention deals with the constant assurance of thermal and acoustic comfort for passengers and crew members in an aircraft.

In an aircraft, various sources of noise emission create background noise in the areas occupied by people, such as a passenger cabin or a crew station. Said background noise may be considered a source of discomfort for the passengers and the crew. For example, said background noise may be external noise, e.g., noise originating from the engines and/or aerodynamic noise, and/or internal noise which may be linked to air conditioning and/or equipment ventilation systems.

A common solution for passively reducing the level of noise in an aircraft is employing materials having acoustic absorption properties, i.e., materials having the effect of reducing the intensity of sound waves by causing accelerated damping of said waves. Glass wool in the form of a blanket is one example for such materials which is known to be used in aircraft cabin walls between a structural lining of a fuselage and cabin delimiting panels. Such a blanket containing glass wool has a double function of thermal insulation and acoustic absorption.

However, at least certain frequencies, in particular low frequencies in the audible range, cannot be effectively absorbed with such a glass wool blanket. In fact, a large volume of absorbent materials would be necessary to provide for satisfying acoustic absorption. However, due to weight and volume restrictions on board an aircraft, a large volume of absorbent material is unacceptable.

A common solution for actively reducing the level of noise in an aircraft, known as ANC (Active Noise Control), consists in measuring the ambient noise and generating a cancelling noise by controlling the amplitude and phase of the cancelling noise. For generating the cancelling noise, actuators are arranged in the region in which a noise level is to be reduced. Said actuators then generate sound waves or vibrations of phase and intensity which reduce the level of sound energy or solid waves within objects by interference. However, subsequent installation of such actuators and the related wiring in an aircraft is an elaborate measure and might cause problems of mechanical interference with other equipment due to the limited installation space present and problems with increased weight. An ANC-system for an aircraft is known from US 2010/0252677 A1.

The inclusion of such an ANC-system in modular cabin panels already during manufacturing of the cabin panels is known from DE 10 2013 102 612 A1.

Moreover, DE 10 2018 113 504 A1 describes a sandwich structure component provided with wiring and recesses for receiving functional elements such as sensors and actuators of an ANC-system which allows an easy subsequent installation of an ANC-system within an aircraft equipped with such sandwich structure components.

However, a further problem to be dealt with in the field of aircraft insulation is the accumulation of condensed water within glass wool blankets. A soaked glass wool blanket has a significantly increased weight compared to a dry glass wool blanket, and the thermal and acoustic insulation properties of a soaked glass wool blanket are significantly decreased. Thus, also a soaked glass wool blanket is undesired on board an aircraft. As with the known glass wool blankets, water intake, especially in the form of water vapor, cannot be completely prevented, soaked glass wool blankets are to be checked at regular intervals for need of dehumidification or change in order to keep the aircraft weight as low as possible so as to balance flight economy and in order to ensure proper thermal and acoustic damping. Such necessity for regular check intervals significantly increases the maintenance effort

A moisture control system is known from EP 3 696 082 A1 and includes an anode coupled to an insulation blanket that is positioned between an inner wall and an outer wall of an aircraft fuselage, a cathode coupled to an inferior surface of the outer wall, and a power control unit coupled to the anode and the cathode to apply voltage across the anode and the cathode. When the voltage is applied across the anode and the cathode, moisture is drawn away from the anode and toward the cathode on the inferior surface of the outer wall and guided along a drainage path provided via structural members disposed between the inner wall and the outer wall toward a drainage port.

JP 2005 003777 A provides a system to surely reduce noise transmitting through an outer wall independently of an indoor position. Noise transmitted through the outer wall is transmitted to the inner wall through a filmy loudspeaker. The noise transmitted to the inner wall can be reduced by outputting sound for cancelling the noise from the filmy loudspeaker. Thus, the noise can be prevented from entering into the room formed inside the wall parts. A pattern of a surface wavefront generated by filmy loudspeaker can easily be made nearer to the surface wavefront of a noise source by arranging the filmy loudspeaker so that the noise may be interrupted in the inroad direction, thereby absorbing the noise energy at an optional place on the output side of the filmy loudspeaker.

According to FR 2 918 780 A1, to produce a covering panel in composite sandwich with a honeycomb core and acoustically active, the honeycomb core is prepared by making indentations and by integrating acoustic transducers into said indentations. Notches in the walls of the cells of the cellular core make it possible to produce cable trays in which the supply cables of the transducers are routed from an electrical connection point of the panel. An active noise control device, in particular for an aircraft, uses such panels as a replacement for conventional trim panels.

An acoustic adaptive noise generating device in the form of a flat panel loudspeaker is described in US 2001/0211721 A and suitable for increasing people's powers of concentration in acoustically difficult surroundings. The adaptive noise generating device includes a carrier panel, an actuator arranged on the carrier panel. A control device is connected to the actuator and permits adjustment of noise signals emitted by the actuator.

It is an object of the present invention to provide a thermal and acoustic insulation system for an aircraft which improves the thermal and acoustic comfort for passengers and crew members while only requiring a minimal installation effort, similar to the effort necessary for the installation of known glass wool blankets, and while only necessitating on-demand maintenance.

This object is solved by the multifunctional thermal and acoustic insulation system for an aircraft as defined in claim 1 as well as the aircraft comprising said multifunctional thermal and acoustic insulation system as defined in claim 15.

The multifunctional thermal and acoustic insulation system of claim 1 is adapted for installation in an aircraft, such as, for example, a passenger aircraft or a helicopter. For installation, the system is adapted to be received between an inner surface of an aircraft primary structure, such as an aircraft fuselage structure, and a surface of a panel arrangement delimiting an aircraft cabin, the surface facing away from the aircraft cabin. Thus, the claimed system is adapted to replace blankets of glass wool commonly used in aircrafts to provide for thermal and acoustic insulation.

The system comprises a multilayer structure having a thermal and acoustic damping performance. The multilayer structure comprises a first outer layer, a core layer and a second outer layer. The multilayer structure comprises these layers in a stacked arrangement, wherein the core layer is received between the first and second outer layers so that the first and second outer layers cover the core layer at least on opposite sides thereof. The first and second outer layers are continuous layers. In other words, the first and second outer layers have surfaces not interrupted by any kind of cutout(s) or recess(es) of a size larger than fine perforation(s). Especially, as the functional components form integral parts of the multilayer structure, no layer of the multilayer structure comprises a recess for receipt of a functional component.

The system further comprises a plurality of functional components formed integrally and non-exchangeably with the multilayer structure.

The functional components are provided on a first outer layer side of the core layer and/or on a second outer layer side of the core layer. Preferably, the functional components are provided on the first and/or second outer layers.

The multilayer structure may comprise at least one intermediate layer provided between the core layer and at least one of the first and second outer layers. When comprising at least one intermediate layer, the functional components can be provided on the at least one intermediate layer, e.g. on a surface of the intermediate layer facing the core layer. As an alternative, the functional components can be provided sandwiched between the at least one intermediate layer and at least one of the first and second outer layers. It is conceivable that the intermediate layer is non-continuous, i.e., only is present in sections of the multilayer structure in which functional components are provided. The latter is for example the case, when the functional components are already provided on or integrally formed with the intermediate layer at an assembling step of the multilayer structure, and allows for very easy integration of the functional components into the multilayer structure as the intermediate layer sections provided with the functional components may be simply attached, such as stuck on or adhered to at least one of the first and second outer layers. Analogously to such an at least one non-continuous intermediate layer, i.e., intermediate layer section, the multilayer structure may comprise at least one section of an additional layer attached to at least one of the first and second outer layers at a surface facing away from the core layer.

In addition or as an alternative to the presence of at least one intermediate layer, at least one of the first and second outer layers may comprise multiple layers itself. Then, the functional components can be provided sandwiched between the multiple layers of the first and/or second outer layer.

It is also conceivable to use thin film deposition techniques for integration of functional components in the multilayer structure. Thereby, the functional component is formed as integral part of a layer of the multilayer structure. Known thin film deposition techniques which can be used are, for example, chemical vapor deposition and physical vapor deposition.

All of the above-described ways for integrating functional components in the multilayer structure or any desired combination thereof may be present in the multilayer structure. For example, at least one functional component may be provided
- on the core layer-facing surface of at least one intermediate layer,
- on the core layer-facing surface of at least one of the first and second outer layers,
- sandwiched between an intermediate layer and at least one of the first and second outer layers,
- sandwiched between layers of the first and/or second outer layer, when comprising multiple layers,
and/or
- as integral part of a layer of the multilayer structure.

When not yet installed in an aircraft, the multilayer structure preferably has a planar and flexible shape. A planar shape is herein understood to provide an extension in width and length directions which is respectively greater than an extension in a thickness direction. According to one embodiment, the length extension is greater than the width extension. According to another embodiment, the length extension is smaller than the width extension. For an ease of handling, the multilayer structure may comprise two or more modular panel-like sections of the stacked layer arrangement. The modular panel-like sections can be realized according to each of the previously described embodiments, wherein sections according to only one or both of said embodiments can be part of the multilayer structure. When comprising two or more modular panel-like sections, the functional components then are integrated in each modular panel-like section of the multilayer structure.

For the multilayer structure to be flexible, of course, each of its layers has to be flexible itself. Just as an example for the flexibility of the multilayer structure, the non-installed multilayer structure may be provided rolled up for an easy handling. When installed in an aircraft, the flexibility of the multilayer structure preferably allows conformation of the structure to a shape of the inner surface of an aircraft structure, such as the inner fuselage surface, with a high accuracy of fit. Generally, the multilayer structure preferably is adaptable in shape to a surface the system is to be attached. This allows for an installation taking as less space as possible.

At least one of the group comprising the first and second outer layers and, if present, the at least one intermediate layer (and further comprising, if present, at least one section of an additional layer as described above) can be a flexible foil. Needless to say, at least sections of the layers of the multilayer structure in which no functional components are present as well as the outermost surface of the multilayer structure are non-conductive.

The core layer preferably comprises acoustic and thermal insulation material, for example, glass wool.

As the core layer is provided sandwiched between the first and second outer layers, these first and second outer layers preferably protect the core layer from the surrounding environment of the multilayer structure and preferably also contribute to maintaining the core layer in a desired, especially planar and, e.g., blanket-like shape. Desirably, the first and second outer layers can protect the core layer from water - even though a complete prevention of water intake usually can not be achieved. In view of preventing water intake into the multilayer structure to the extent possible, it can also be advantageous to provide at least one of the first and second outer layers and, if present, the at least one intermediate layer (and/or the at least one section of an additional layer as described above) with a hydrophobic coating. Of course, also an additional or alternative coating is conceivable, e.g. a coating enhancing the fire resistance of the multilayer structure. Moreover, to prevent water intake as best as possible, the core layer may not only be sandwiched between the first and second outer layers but may be completely enclosed, i.e., packed, by layers of the multilayer structure. Therefore, at edges of the multilayer structure, the first and second layers may be connected to provide a closed edge along the circumference of the multilayer structure, e.g. in a manner of a duvet cover for a blanket. Optionally, at least one further connecting layer is provided to extend around the circumference of the multilayer structure, the connecting layer having the shape of a band with parallel edges for connecting each of the parallel edges to a circumferential edge of each of the first and second outer layers, respectively, so as to enclose or pack the core layer in a manner of a box.

Functions of the functional components are related to at least one of the thermal and the acoustic damping performance of the multilayer structure. The functional components thus functionalize the multilayer structure to feature additional functions that go beyond the usual insulation function of the core layer and the covering and/or enclosing function as well as the protecting function of the first and second outer layers as described above.

To realize a functionality of the functional components over an entire width and length extension of the multilayer structure, the functional components are preferably integrated in a distributed manner, especially a substantially equally distributed manner, in the multilayer structure.

The functional components preferably are electronic or electrical components. Each electronic or electrical functional component may be a sensor, an actuator or an interconnection, such as an electrical interconnection, i.e., a conductor, or a data transfer interconnection. A sensor may especially be a microphone or other sensor for sound detection, a vibration sensor, a temperature sensor, a humidity sensor, a gas sensor, a conductivity sensor, a pH sensor or a sensor for corrosion monitoring. Of course, the functional components may comprise more than one sensor of one sensor kind but in addition or alternatively also different kinds of sensors. At least some of the sensors and associated electronics can be self-powered, i.e., need no wiring connection to a power supply. Such self-powering can be achieved by applying energy harvesting mechanisms. Data transfer is preferably also realized wirelessly. Thereby the elaborate installation of wiring and harnesses and also an increase of weight can be avoided. Such self-powering mechanism may be based on the ther-moelectrical effect, vibration harvesting or harvesting of radio frequency (RF) radiation. However, there may also be a physically interconnection in the form of at least one conductive track provided on a layer surface of the multilayer structure, e.g. realized via metallization of the layer surface of the multilayer structure in the region of the conductive track(s). An actuator may especially be a generator of acoustic vibration and/or sound. If such generators are provided in the multilayer structure in a distributed manner, these can be used to allow overall ANC in the multifunctional thermal and acoustic insulation system and also surrounding environment. For example, the generators can generate sound counteracting a noise present in the surrounding environment of the insulation system and/or by contacting, in an installed position, an aircraft primary structure, such as the aircraft fuselage, or a cabin delimiting wall, to generate counteracting waves in the solid. In this latter example, the stimulation directions of the generators are directed towards the surrounding environment of the insulation system. However, it is also advantageous to position such generators so as to direct their stimulation output towards the core layer. Thereby, the generated sound and/or vibration is sent to the material of the core layer, e.g. glass wool, which has an influence on the acoustic insulation effect of the core layer. Thus, the sound and/or vibration can be generated in a way to increase the acoustic damping performance of the core layer, or even a wider damping frequency bandwidth range can be realized for the core layer material.

The functional components are preferably adapted to perform at least one of the following functions:
- measurement of water intake into the multilayer structure and, especially, the core layer,
- analysis of the thermal and acoustic damping performance of the multilayer structure,
- stimulation of the multilayer structure and, especially, the core layer, in a manner to improve the acoustic damping performance of the multilayer structure, and
- stimulation of a surrounding environment in which the multifunctional thermal and acoustic insulation system is installed, in a manner counteracting a noise and/or a vibration present in the surrounding environment.

The provision of sensors, e.g. humidity sensors, can help to deal with the problem of water penetration into the multilayer structure. As discussed above, water penetration can not be completely avoided so that more and more water accumulates within the multilayer structure during its lifetime, resulting in an increase of the overall weight of the insulation system. The sensors can measure the humidity within the multilayer structure and thereby support maintenance on demand to drain or replace the multilayer structure as required.

Moreover, distributed acoustic sensors, e.g. microphones, integrated into the multilayer structure can be effectively utilized to detect when the core layer is not fulfilling its acoustic insulation purpose properly anymore. Thereby, the acoustic sensors also support maintenance of the multilayer structure on demand as required. Furthermore, distributed temperature sensor integrated into the multilayer structure can be effectively utilized to detect when the core layer is not fulfilling its thermal insulation purpose properly anymore. Thereby, also the temperature sensors support maintenance of the multilayer structure on demand as required.

Functions of the functional components are controlled by one or more control units, preferably a single control unit. The multifunctional thermal and acoustic insulation system may comprise at least one connection point and/or at least one interface for connecting the system to the control unit(s). In further accordance with claim 1, the multilayer structure comprises modular panel-like sections, wherein functional components of two adjacent modular panel-like sections are interconnectable to allow a joint control of the interconnected functional components by a control unit. Especially, all or at least one or more groups of the functional components of two adjacent modular panel-like sections of the multifunctional thermal and acoustic insulation system are interconnected to allow joint control with one or more control units. Thereby, the necessity of connecting each modular panel-like section separately to a control unit is avoided. For example, all functional components of the system may be controlled by a single control unit or each group of a number of groups into which the functional components may divided may be controlled by a separate control unit.

The aircraft of claim 15 comprises an aircraft primary structure, such as an aircraft fuselage structure, and a panel structure delimiting an aircraft cabin. Further the aircraft of claim 15 comprises the above-described thermal and acoustic insulation system received between an inner surface of the aircraft primary structure and a panel structure surface facing away from the aircraft cabin.

In sum, the following positive effects can be achieved by the above-described multifunctional thermal and acoustic insulation system:
- Multifunctionality is already considered during the design phase and implemented during the manufacturing phase so that various different functions usually realized by different components to be separately installed in an aircraft can be realized in a single common system to be installed in an aircraft.
- The distributed integration of the functional components allows the overall system to benefit from the widespread functional effect of the components, which is a substantial improvement compared to the singular and stationary effect separately installed functional components commonly have.
- By integrating all the functional components including wiring into the multilayer structure, when installing the system in an aircraft, the wiring and harnesses installation effort and also the weight that would be added with wiring and harnesses installation is reduced to a minimum. Due to the directly integrated functionality of the system, minor cables and installation bonding film, rivets and reinforcements are necessary.
- Finally, as described above, the provided monitoring functionalities enable sophisticated maintenance concepts.

A detailed description of an exemplary embodiment of the claimed multifunctional thermal and acoustic insulation system provided in an aircraft is given in the following with reference to the figures which show schematically:
- Fig. 1: a general view of an aircraft, in this case a civil transport jet airplane;
- Fig. 2: a section of a cross-section through a fuselage of the aircraft of Fig. 1, illustrating a cross-section through the multifunctional thermal and acoustic insulation system installed in the aircraft;
- Fig. 3: a detailed cross-sectional side view of an enlarged section of the multifunctional thermal and acoustic insulation system of Fig. 2;
- Fig. 4: a detailed front view of the enlarged section of Fig. 3;
- Fig. 5: a front view of two interconnected panel-like sections of the multilayer structure; and
- Fig. 6: another detailed cross-sectional side view of an enlarged section of the multifunctional and acoustic insulation system of Fig. 2, said enlarged section differing from the section of Fig. 3.

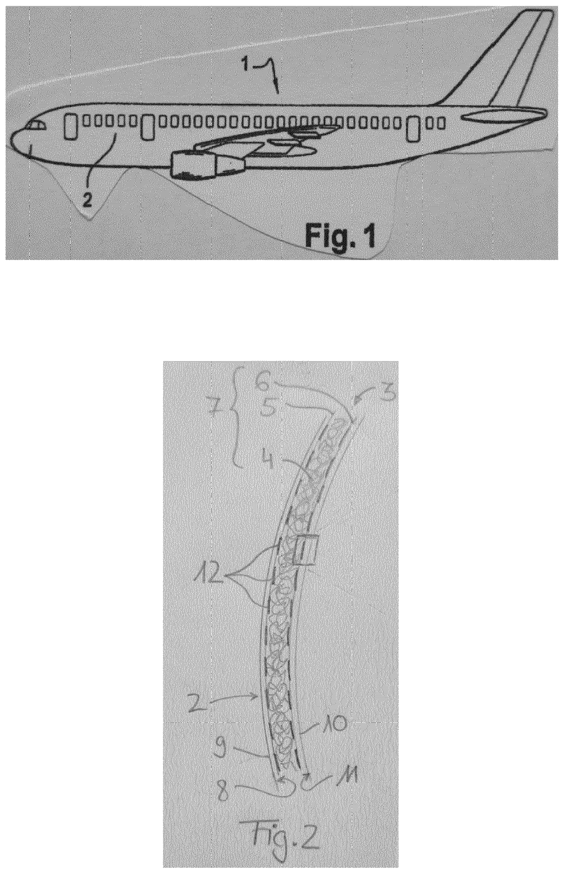

In Fig. 1, an aircraft 1, especially a civil transport jet airplane, having a fuselage 2 is shown.

As illustrated in Fig. 2, said aircraft 1 is provided with a multifunctional thermal and acoustic insulation system 3. Said multifunctional thermal and acoustic insulation system 3 is of the kind generally described in the foregoing. In the embodiment shown in Fig. 2, the multifunctional thermal and acoustic insulation system 3 comprises a core layer of glass wool 4 covered on opposite sides thereof by respective first and second outer layers 5, 6. Together, the core layer 4 and the first and second outer layers 5, 6 form a multilayer structure 7. In the installed position of the multifunctional thermal and acoustic insulation system 3 as shown in Fig. 2, the first outer layer 5 faces an inner surface 8 of an outer skin 9 of the aircraft fuselage 2, and the second outer layer 6 faces a cabin side wall 10 and especially a surface 11 of said cabin side wall 10 facing away from an aircraft cabin. Each of the first and second outer layers 5, 6 is a foil layer. A plurality of functional components 12 are shown as integrated parts of said first and second outer foil layers 5, 6 provided equally distributed within the foil layers 5, 6.

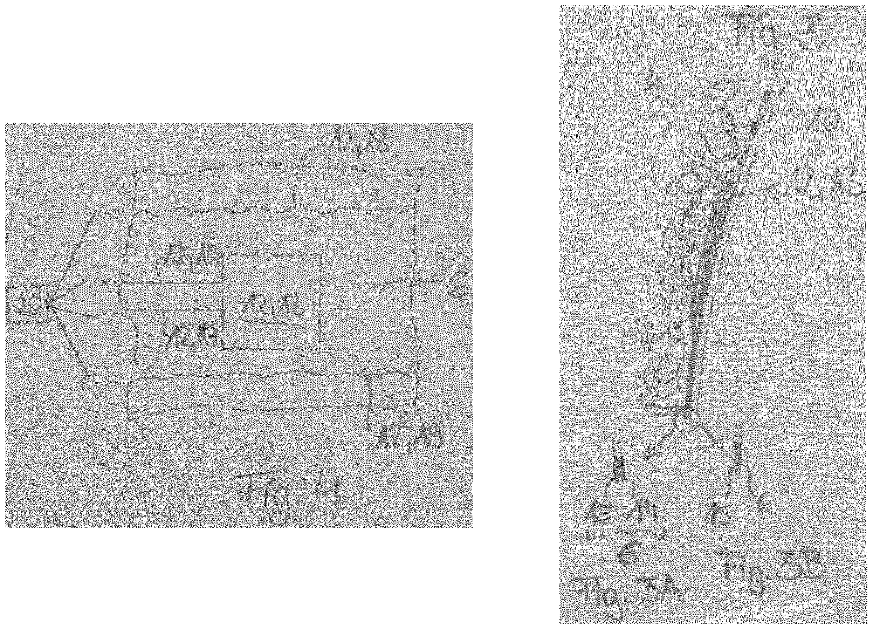

Fig. 3 gives a detailed cross-sectional side view of an enlarged partial section of the multilayer structure 7 of Fig. 2, the partial section enlarged in Fig. 3 is marked by a box in Fig. 2. Said enlarged partial section shows a sensor 13 as one of the functional components 12 integrated in the second outer foil layer 6, wherein the foil layer 6 either is a two-layer foil (see Fig. 3A) and the functional component 12 is received in between the two layers 14, 15 of the second outer foil layer 6, or the second layer 15 shown in Fig. 3 is an intermediate layer of the multilayer structure 7 (see Fig. 3B) and the functional component 12 is received in between the second outer foil layer 6 and the intermediate layer 15.

Fig. 4 gives a detailed front view of the enlarged partial section of Fig. 3, wherein a section of the cabin side wall 10 present in the detailed cross-sectional side view of Fig. 3 is omitted. Thus, Fig. 4 shows a detailed front view of the enlarged partial section of the multilayer structure 7 of Fig. 3. In addition to the functional component 12 integrated in the second outer foil layer 6, Fig. 4 shows further functional components 12, namely interconnections 16, 17 in the form of tracks extending to and from the sensor 13, e.g. to allow control signals to be sent to the sensor 13 and data signals to be received from the sensor 13. Said interconnections 16, 17 may also be received between the two layers 14, 15 of the second outer foil layer 6 analogue to the sensor 13. Two additional integrated tracks 18, 19 as further functional components 12 are shown in Fig. 4, which may also be received between the two layers 14, 15 of the second outer foil layer 6 analogue to the sensor 13, and which may function as electrical interconnections or data transfer connections to and/or from further functional components 12 not shown in Fig. 4. To provide for a joint control of the functional components 12, a single control unit 20 is provided connected to the functional components 12.

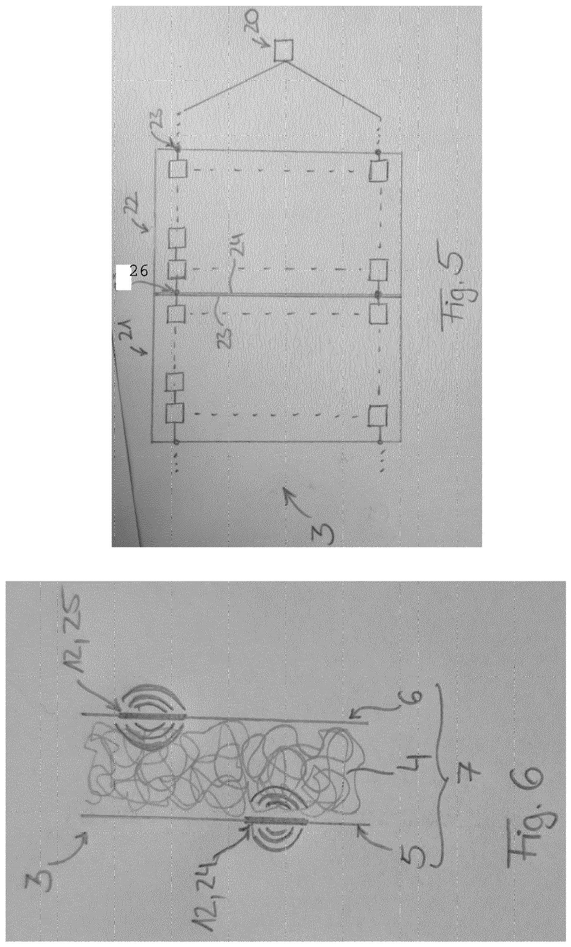

Fig. 5 shows, according to claim 1, the multifunctional thermal and acoustic insulation system 3 having two panel-like blanket sections 21, 22 functionally interconnected with one another at adjacent edges 23, 24 of the blanket sections 21, 22 via interconnecting points 26. Any desired number of such panel-like blanket sections 21, 22 can be interconnected via adjacent edges so as to insulate any desired region of the fuselage 2. Via said interconnecting points 26, which also serve as interfaces for connecting to the control unit 20, a joint connection of the functional components 12 of all said panel-like blanket sections 21, 22 with the single control unit 20 can be realized.

Finally, Fig. 6 gives another detailed cross-sectional side view of an enlarged section of the multifunctional and acoustic insulation system 3 of Fig. 2, wherein said enlarged section differs from the section shown in Fig. 3 and the fuselage 2 as well as the cabin side wall 10 are omitted. The functional components 12 in the section shown in Fig. 6 are sound generators 24, 25. For active noise cancelling, a first sound generator 24 is shown integrated in the first outer layer 5. This first sound generator 24 is adapted to direct sound waves towards the fuselage 2 to counteract vibrations, i.e., solid waves, which may be present in the fuselage 2. Moreover, this first sound generator 24 within the first outer layer 5 is also adapted to direct sound waves towards the core layer 4 to improve its acoustic damping performance by increasing the damping frequency bandwidth range of the core layer 4. In addition, a second sound generator 25 is shown integrated in the second outer layer 6. This second sound generator 25 is adapted to direct sound waves towards the aircraft cabin. Said sound waves can counteract vibrations, i.e., solid waves, which may be present in the cabin side wall 10. Said sound waves however can also counteract noise present in the aircraft cabin. Moreover, also this second sound generator 25 within the second outer layer 6 is adapted to direct sound waves towards the core layer 4 to support the first sound generator 24 in improving the acoustic damping performance of the core layer 4 by increasing the damping frequency bandwidth range of the core layer 4. The directions in which the first and second sound generators 24, 25 output stimulation are illustrated by respective series of three ever-increasing arches originating from the first and second sound generators 24, 25, respectively.

## Claims

1. Multifunctional thermal and acoustic insulation system (3) for an aircraft (1), the system (3) adapted to be received between an inner surface (8) of an aircraft primary structure, such as an aircraft fuselage structure (2, 9), and a surface (11) of a panel arrangement (10) delimiting an aircraft cabin, the surface (11) facing away from the aircraft cabin, and comprising:
- a multilayer structure (7) having a thermal and acoustic damping performance and comprising, in a stacked arrangement,
o a continuous first outer layer (5),
o a core layer (4) and
o a continuous second outer layer (6),
wherein the core layer (4) is received between the first and second outer layers (5, 6) so that the first and second outer layers (5, 6) cover the core layer (4) at least on opposite sides thereof,
and
- a plurality of functional components (12, 13, 16, 17, 18, 19) formed integrally and non-exchangeably with the multilayer structure (7), wherein functions of the functional components (12, 13, 16, 17, 18, 19) are related to at least one of the thermal and the acoustic damping performance of the multilayer structure (7) and wherein the functional components (12, 13, 16, 17, 18, 19) are provided on a first outer layer side of the core layer (4) and/or on a second outer layer side of the core layer (4),
wherein the multilayer structure (7) comprises two or more modular panel-like blanket sections (21, 22) of the stacked layer arrangement and the functional components (12, 13, 16, 17, 18, 19) are integrated in each modular panel-like blanket section (21, 22);
**characterized in that**
functional components (12, 13, 16, 17, 18, 19) of two adjacent modular panel-like blanket sections (21, 22) are interconnectable via interconnecting points (26) at adjacent edges (23, 24) of the modular panel-like blanket sections (21, 22) to allow joint control of said interconnected functional components (12, 13, 16, 17, 18, 19) of the two adjacent modular panel-like blanket sections (21, 22), and wherein the system (3) further comprises a control unit for said joint control of said interconnected functional components (12, 13, 16, 17, 18, 19) of two adjacent modular panel-like blanket sections (21, 22) so that provision of a separate control unit for each modular panel-like section is avoided.

2. Multifunctional thermal and acoustic insulation system (3) of claim 1, wherein the functional components (12, 13, 16, 17, 18, 19) are provided on the first and/or second outer layers (5, 6).

3. Multifunctional thermal and acoustic insulation system (3) of claim 1 or 2, wherein the multilayer structure (7) comprises at least one intermediate layer (15) provided between the core layer (4) and at least one of the first and second outer layers (5, 6) and/or at least one of the first and second outer layers (5, 6) itself comprises multiple layers (14, 15).

4. Multifunctional thermal and acoustic insulation system (3) of claim 3,
wherein the functional components (12, 13, 16, 17, 18, 19) are provided on the at least one intermediate layer (15); and/or
wherein the functional components (12, 13, 16, 17, 18, 19) are provided
- sandwiched between the at least one intermediate layer (15) and at least one of the first and second outer layers (5, 6), and/or
- sandwiched between the multiple layers (14, 15) of the first and/or second outer layer (5, 6).

5. Multifunctional thermal and acoustic insulation system (3) of any one of claims 1 to 4, wherein the multilayer structure (7) is flexible and adaptable in shape to a surface the system it is to be attached to, especially, to the inner surface (8) of an aircraft structure (2, 9).

6. Multifunctional thermal and acoustic insulation system (3) of any one of claims 1 to 5,
wherein at least one of the first and second outer layers (5, 6) and, if present, the at least one intermediate layer (15) is a flexible foil; and/or
wherein at least one of the first and second outer layers (5, 6) and, if present, the at least one intermediate layer (14) has a coating, preferably a hydrophobic coating.

7. Multifunctional thermal and acoustic insulation system (3) of any one of claims 1 to 6, wherein the functional components (12, 13, 16, 17, 18, 19) are integrated in a distributed manner, preferably in a substantially equally distributed manner, in the multilayer structure (7).

8. Multifunctional thermal and acoustic insulation system (3) of any one of claims 1 to 7, wherein the functional components (12, 13, 16, 17, 18, 19) are electronic or electrical components.

9. Multifunctional thermal and acoustic insulation system (3) of claim 8, wherein the electronic or electrical components (12, 13, 16, 17, 18, 19) are components selected from a group comprising at least one of: sensors (13), actuators (24, 25), and interconnections (16, 17, 18, 19).

10. Multifunctional thermal and acoustic insulation system (3) of any one of claims 1 to 9, wherein the functional components (12, 13, 16, 17, 18, 19) are adapted to perform at least one of the following functions:
- measurement of water intake into the multilayer structure (7) and, especially, the core layer (4),
- analysis of the thermal and acoustic damping performance of the multilayer structure (7),
- stimulation of the multilayer structure (7) and, especially, the core layer (4), in a manner to improve the acoustic damping performance of the multilayer structure (7), and
- stimulation of a surrounding environment in which the multifunctional thermal and acoustic insulation system (3) is installed, in a manner counteracting a noise and/or a vibration present in the surrounding environment.

11. Multifunctional thermal and acoustic insulation system (3) of any one of claims 1 to 10, wherein all or at least one or more groups of functional components (12, 13, 16, 17, 18, 19) of two adjacent modular panel-like blanket sections (21, 22) are interconnectable to allow joint control of said interconnected functional components (12, 13, 16, 17, 18, 19) of the two adjacent modular panel-like blanket sections (21, 22), and wherein the control unit is configured for said joint control of said all or at least one or more groups of interconnected functional components (12, 13, 16, 17, 18, 19) of two adjacent modular panel-like blanket sections (21, 22).

12. Multifunctional thermal and acoustic insulation system (3) of any one of claims 1 to 11, wherein the core layer (4) comprises acoustic and thermal insulation material.

13. Multifunctional thermal and acoustic insulation system (3) of any one of claims 1 to 12, wherein the core layer (4) is not only sandwiched between the first and second outer layers but completely enclosed by layers (5, 6) of the multilayer structure (7).

14. Multifunctional thermal and acoustic insulation system (3) of any one of claims 1 to 13, wherein no layer (4, 5, 6, 14, 15) of the multilayer structure (7) comprises a recess for receipt of a functional component (12, 13, 16, 17, 18, 19).

15. Aircraft (1) comprising:
- an aircraft primary structure (2, 9),
- a panel structure (10) delimiting an aircraft cabin, and
- the multifunctional thermal and acoustic insulation system (3) of any one of claims 1 to 14,
wherein the multifunctional thermal and acoustic insulation system (3) is received between an inner surface (8) of the aircraft primary structure (2, 9) and a panel structure surface (11) facing away from the aircraft cabin.

## Patentansprüche

1. Multifunktionales System (3) zur thermischen und akustischen Isolierung für ein Luftfahrzeug (1), wobei das System (3) ausgelegt ist, zwischen einer Innenfläche (8) einer primären Luftfahrzeugstruktur wie etwa einer Rumpfstruktur (2, 9) des Luftfahrzeugs und einer Oberfläche (11) einer Plattenanordnung (10), die eine Luftfahrzeugkabine begrenzt, aufgenommen zu sein, wobei die Oberfläche (11) von der Luftfahrzeugkabine abgewandt ist, und Folgendes umfasst:
- eine Mehrschichtstruktur (7), die eine thermische und akustische Dämpfungsleistung aufweist und in einer geschichteten Anordnung Folgendes umfasst:
o eine ununterbrochene erste äußere Schicht (5),
o eine Kernschicht (4), und
o eine ununterbrochene zweite äußere Schicht (6), wobei die Kernschicht (4) zwischen der ersten und der zweiten äußeren Schicht (5, 6) aufgenommen ist, derart, dass die erste und die zweite äußere Schicht (5, 6) die Kernschicht (4) zumindest auf ihren gegenüberliegenden Seiten abdecken,
und
- mehrere funktionale Komponenten (12, 13, 16, 17, 18, 19), die mit der Mehrschichtstruktur (7) einteilig und nicht austauschbar ausgebildet sind, wobei die Funktionen der funktionalen Komponenten (12, 13, 16, 17, 18, 19) die thermische und/oder die akustische Dämpfungsleistung der Mehrschichtstruktur (7) betreffen und wobei die funktionalen Komponenten (12, 13, 16, 17, 18, 19) auf der Seite einer ersten äußeren Schicht der Kernschicht (4) und/oder auf der Seite einer zweiten äußeren Schicht der Kernschicht (4) vorgesehen sind,
wobei die Mehrschichtstruktur (7) zwei oder mehr modulare, plattenartige Abdeckungsabschnitte (21, 22) der geschichteten Schichtanordnung umfasst und die funktionalen Komponenten (12, 13, 16, 17, 18, 19) in jedem modularen, plattenartigen Abdeckungsabschnitt (21, 22) integriert sind; **dadurch gekennzeichnet, dass**
funktionale Komponenten (12, 13, 16, 17, 18, 19) von zwei benachbarten modularen, plattenartigen Abdeckungsabschnitten (21, 22) über Kopplungspunkte (26) an benachbarten Kanten (23, 24) der modularen, plattenartigen Abdeckungsabschnitte (21, 22) koppelbar sind, um eine gemeinsame Steuerung der gekoppelten funktionalen Komponenten (12, 13, 16, 17, 18, 19) der zwei benachbarten modularen, plattenartigen Abdeckungsabschnitte (21, 22) zu ermöglichen, und wobei das System (3) ferner eine Steuereinheit für die gemeinsame Steuerung der gekoppelten funktionalen Komponenten (12, 13, 16, 17, 18, 19) von zwei benachbarten modularen, plattenartigen Abdeckungsabschnitten (21, 22) umfasst, derart, dass die Bereitstellung einer je eigenen Steuereinheit für jeden modularen, plattenartigen Abschnitt vermieden wird.

2. Multifunktionales System (3) zur thermischen und akustischen Isolierung nach Anspruch 1, wobei die funktionalen Komponenten (12, 13, 16, 17, 18, 19) auf der ersten und/oder der zweiten äußeren Schicht (5, 6) vorgesehen sind.

3. Multifunktionales System (3) zur thermischen und akustischen Isolierung nach Anspruch 1 oder 2, wobei die Mehrschichtstruktur (7) mindestens eine Zwischenschicht (15) umfasst, die zwischen der Kernschicht (4) und der ersten und/oder der zweiten äußeren Schicht (5, 6) vorgesehen ist und/oder die erste und/oder die zweite äußere Schicht (5, 6) selbst mehrere Schichten (14, 15) umfassen.

4. Multifunktionales System (3) zur thermischen und akustischen Isolierung nach Anspruch 3, wobei die funktionalen Komponenten (12, 13, 16, 17, 18, 19) auf der mindestens einen Zwischenschicht (15) vorgesehen sind; und/oder wobei die funktionalen Komponenten (12, 13, 16, 17, 18, 19) vorgesehen sind
- eingebettet zwischen der mindestens einen Zwischenschicht (15) und der ersten und/oder der zweiten äußeren Schicht (5, 6), und/oder
- eingebettet zwischen den mehreren Schichten (14, 15) der ersten und/oder der zweiten äußeren Schicht (5, 6).

5. Multifunktionales System (3) zur thermischen und akustischen Isolierung nach einem der Ansprüche 1 bis 4, wobei die Mehrschichtstruktur (7) flexibel und bezüglich der Form an eine Oberfläche, an der das System befestigt werden soll, insbesondere an die Innenfläche (8) einer Luftfahrzeugstruktur (2, 9), anpassbar ist.

6. Multifunktionales System (3) zur thermischen und akustischen Isolierung nach einem der Ansprüche 1 bis 5,
wobei die erste und/oder die zweite äußere Schicht (5, 6) und, falls vorhanden, die mindestens eine Zwischenschicht (15) eine flexible Folie ist; und/oder wobei die erste und/oder die zweite äußere Schicht (5, 6) und, falls vorhanden, die mindestens eine Zwischenschicht (14) eine Beschichtung, vorzugsweise eine wasserabweisende Beschichtung, aufweist.

7. Multifunktionales System (3) zur thermischen und akustischen Isolierung nach einem der Ansprüche 1 bis 6, wobei die funktionalen Komponenten (12, 13, 16, 17, 18, 19) auf eine verteilte Weise, vorzugsweise auf eine im Wesentlichen gleichmäßig verteilte Weise, in der Mehrschichtstruktur (7) integriert sind.

8. Multifunktionales System (3) zur thermischen und akustischen Isolierung nach einem der Ansprüche 1 bis 7, wobei die funktionalen Komponenten (12, 13, 16, 17, 18, 19) elektronische oder elektrische Komponenten sind.

9. Multifunktionales System (3) zur thermischen und akustischen Isolierung nach Anspruch 8, wobei die elektronischen oder elektrischen Komponenten (12, 13, 16, 17, 18, 19) Komponenten sind, die aus einer Gruppe ausgewählt sind, die mindestens eines der folgenden Elemente umfasst: Sensoren (13), Aktoren (24, 25) und Verbindungsleitungen (16, 17, 18, 19).

10. Multifunktionales System (3) zur thermischen und akustischen Isolierung nach einem der Ansprüche 1 bis 9, wobei die funktionalen Komponenten (12, 13, 16, 17, 18, 19) ausgelegt sind, die folgenden Funktionen durchzuführen:
- Messung einer Wasseraufnahme in die Mehrschichtstruktur (7) und insbesondere in die Kernschicht (4), und/oder
- Analyse der thermischen und akustischen Dämpfungsleistung der Mehrschichtstruktur (7), und/oder
- Stimulation der Mehrschichtstruktur (7) und insbesondere der Kernschicht (4) derart, dass die akustische Dämpfungsleistung der Mehrschichtstruktur (7) verbessert wird, und/oder
- Stimulation einer nahen Umgebung, in der das multifunktionale System (3) zur thermischen und akustischen Isolierung installiert ist, auf eine Weise, die einem Geräusch und/oder einer Schwingung, die in der nahen Umgebung vorhanden sind, entgegenwirkt.

11. Multifunktionales System (3) zur thermischen und akustischen Isolierung nach einem der Ansprüche 1 bis 10, wobei alle oder zumindest eine oder mehrere Gruppen der funktionalen Komponenten (12, 13, 16, 17, 18, 19) von zwei benachbarten modularen, plattenartigen Abdeckungsabschnitten (21, 22) koppelbar sind, um eine gemeinsame Steuerung der gekoppelten funktionalen Komponenten (12, 13, 16, 17, 18, 19) der zwei benachbarten modularen, plattenartigen Abdeckungsabschnitte (21, 22) zu ermöglichen,
und wobei die Steuereinheit für die gemeinsame Steuerung aller oder zumindest der einen oder mehreren Gruppen der gekoppelten funktionalen Komponenten (12, 13, 16, 17, 18, 19) von zwei benachbarten modularen, plattenartigen Abdeckungsabschnitten (21, 22) konfiguriert ist.

12. Multifunktionales System (3) zur thermischen und akustischen Isolierung nach einem der Ansprüche 1 bis 11, wobei die Kernschicht (4) Material zur akustischen und thermischen Isolierung enthält.

13. Multifunktionales System (3) zur thermischen und akustischen Isolierung nach einem der Ansprüche 1 bis 12, wobei die Kernschicht (4) nicht lediglich zwischen der ersten und der zweiten äußeren Schicht eingebettet ist, sondern durch die Schichten (5, 6) der Mehrschichtstruktur (7) vollständig eingeschlossen ist.

14. Multifunktionales System (3) zur thermischen und akustischen Isolierung nach einem der Ansprüche 1 bis 13, wobei keine Schicht (4, 5, 6, 14, 15) der Mehrschichtstruktur (7) eine Vertiefung zur Aufnahme einer funktionalen Komponente (12, 13, 16, 17, 18, 19) umfasst.

15. Luftfahrzeug (1), das Folgendes umfasst:
- eine primäre Luftfahrzeugstruktur (2, 9),
- eine Plattenstruktur (10), die eine Luftfahrzeugkabine begrenzt, und
- das multifunktionale System (3) zur thermischen und akustischen Isolierung nach einem der Ansprüche 1 bis 14,
wobei das multifunktionale System (3) zur thermischen und akustischen Isolierung zwischen einer Innenfläche (8) der primären Luftfahrzeugstruktur (2, 9) und einer Plattenstrukturoberfläche (11), die von der Luftfahrzeugkabine abgewandt ist, aufgenommen ist.

## Revendications

1. Système (3) d'isolation thermique et acoustique multifonction destiné à un aéronef (1), le système (3) étant adapté à être reçu entre une surface interne (8) d'une structure primaire d'aéronef, telle qu'une structure (2, 9) de fuselage d'aéronef, et une surface (11) d'un agencement (10) de panneaux délimitant une cabine d'aéronef, la surface (11) étant orientée à l'opposé de la cabine d'aéronef, et comprenant :
- une structure multicouche (7) présentant des propriétés d'amortissement thermique et acoustique et comprenant, dans un agencement empilé,
o une première couche externe continue (5),
o une couche centrale (4) et
o une deuxième couche externe continue (6), la couche centrale (4) étant reçue entre les première et deuxième couches externes (5, 6) de sorte que les première et deuxième couches externes (5, 6) recouvrent la couche centrale (4) au moins sur ses côtés opposés,
et
- une pluralité de composants fonctionnels (12, 13, 16, 17, 18, 19) formés d'un seul tenant et de manière non remplaçable avec la structure multicouche (7), des fonctions des composants fonctionnels (12, 13, 16, 17, 18, 19) étant liées à au moins une des propriétés d'amortissement thermique et acoustique de la structure multicouche (7) et les composants fonctionnels (12, 13, 16, 17, 18, 19) étant disposés sur un premier côté de couche externe de la couche centrale (4) et/ou sur un deuxième côté de couche externe de la couche centrale (4),
la structure multicouche (7) comprenant au moins deux sections modulaires de matelas de type panneau (21, 22) de l'agencement empilé de couches et les composants fonctionnels (12, 13, 16, 17, 18, 19) étant intégrés dans chaque section modulaire de matelas de type panneau (21, 22) ; **caractérisé en ce que**
des composants fonctionnels (12, 13, 16, 17, 18, 19) de deux sections modulaires de matelas de type panneau (21, 22) sont interconnectables au moyen de points d'interconnexion (26) au niveau de bords (23, 24) adjacents des sections modulaires de matelas de type panneau (21, 22) pour permettre une commande conjointe desdits composants fonctionnels (12, 13, 16, 17, 18, 19) interconnectés des deux sections modulaires de matelas de type panneau (21, 22) adjacentes, et le système (3) comprenant en outre une unité de commande pour ladite commande conjointe desdits composants fonctionnels (12, 13, 16, 17, 18, 19) interconnectés de deux sections modulaires de matelas de type panneau (21, 22) adjacentes de façon à éviter de déployer une unité de commande distincte pour chaque section modulaire de type panneau.

2. Système (3) d'isolation thermique et acoustique multifonction selon la revendication 1, les composants fonctionnels (12, 13, 16, 17, 18, 19) étant disposés sur la première et/ou la deuxième couche externe (5, 6).

3. Système (3) d'isolation thermique et acoustique multifonction selon la revendication 1 ou 2, la structure multicouche (7) comprenant au moins une couche intermédiaire (15) disposée entre la couche centrale (4) et au moins une des première et deuxième couches externes (5, 6) et/ou au moins une des première et deuxième couches externes (5, 6) comprenant elle-même de multiples couches (14, 15).

4. Système (3) d'isolation thermique et acoustique multifonction selon la revendication 3, les composants fonctionnels (12, 13, 16, 17, 18, 19) étant disposés sur l'au moins une couche intermédiaire (15) ; et/ou
les composants fonctionnels (12, 13, 16, 17, 18, 19) étant disposés
- en sandwich entre l'au moins une couche intermédiaire (15) et au moins une des première et deuxième couches externes (5, 6), et/ou
- en sandwich entre les multiples couches (14, 15) de la première et/ou de la deuxième couche externe (5, 6).

5. Système (3) d'isolation thermique et acoustique multifonction selon l'une quelconque des revendications 1 à 4, la structure multicouche (7) étant souple et sa forme pouvant s'adapter à une surface à laquelle le système est appelé à être fixé, en particulier à la surface interne (8) d'une structure (2, 9) d'aéronef.

6. Système (3) d'isolation thermique et acoustique multifonction selon l'une quelconque des revendications 1 à 5,
au moins une des première et deuxième couches externes (5, 6) et, le cas échéant, l'au moins une couche intermédiaire (15) prenant la forme d'une feuille souple ; et/ou
au moins une des première et deuxième couches externes (5, 6) et, le cas échéant, l'au moins une couche intermédiaire (14) étant pourvue(s) d'un revêtement, de préférence d'un revêtement hydrophobe.

7. Système (3) d'isolation thermique et acoustique multifonction selon l'une quelconque des revendications 1 à 6, les composants fonctionnels (12, 13, 16, 17, 18, 19) étant intégrés de manière répartie, de préférence de manière répartie sensiblement uniformément, dans la structure multicouche (7).

8. Système (3) d'isolation thermique et acoustique multifonction selon l'une quelconque des revendications 1 à 7, les composants fonctionnels (12, 13, 16, 17, 18, 19) étant des composants électroniques ou électriques.

9. Système (3) d'isolation thermique et acoustique multifonction selon la revendication 8, les composants électroniques ou électriques (12, 13, 16, 17, 18, 19) étant des composants sélectionnés dans le groupe comprenant : des capteurs (13) et/ou des actionneurs (24, 25) et/ou des interconnexions (16, 17, 18, 19).

10. Système (3) d'isolation thermique et acoustique multifonction selon l'une quelconque des revendications 1 à 9, les composants fonctionnels (12, 13, 16, 17, 18, 19) étant adaptés à réaliser au moins une des fonctions suivantes :
- mesure de l'absorption d'eau dans la structure multicouche (7) et, plus particulièrement, dans la couche centrale (4),
- analyse des propriétés d'amortissement thermique et acoustique de la structure multicouche (7),
- stimulation de la structure multicouche (7) et, plus particulièrement, de la couche centrale (4), de manière à améliorer les propriétés d'amortissement acoustique de la structure multicouche (7), et
- stimulation d'un milieu environnant dans lequel le système (3) d'isolation thermique et acoustique multifonction est installé, de manière à contrecarrer un bruit et/ou une vibration présents dans le milieu environnant.

11. Système (3) d'isolation thermique et acoustique multifonction selon l'une quelconque des revendications 1 à 10, la totalité ou au moins un ou plusieurs groupes de composants fonctionnels (12, 13, 16, 17, 18, 19) de deux sections modulaires de matelas de type panneau (21, 22) adjacentes étant interconnectables pour permettre une commande conjointe desdits composants fonctionnels (12, 13, 16, 17, 18, 19) interconnectés de deux sections modulaires de matelas de type panneau (21, 22) adjacentes, et
l'unité de commande étant configurée pour ladite commande conjointe de ladite totalité ou desdits au moins un ou plusieurs groupes de composants fonctionnels (12, 13, 16, 17, 18, 19) interconnectés de deux sections modulaires de matelas de type panneau (21, 22) adjacentes.

12. Système (3) d'isolation thermique et acoustique multifonction selon l'une quelconque des revendications 1 à 11, la couche centrale (4) comprenant un matériau d'isolation acoustique et thermique.

13. Système (3) d'isolation thermique et acoustique multifonction selon l'une quelconque des revendications 1 à 12, la couche centrale (4) étant non seulement prise en sandwich entre les première et deuxième couches externes mais aussi totalement enfermée par les couches (5, 6) de la structure multicouche (7).

14. Système (3) d'isolation thermique et acoustique multifonction selon l'une quelconque des revendications 1 à 13, aucune couche (4, 5, 6, 14, 15) de la structure multicouche (7) ne comprenant un évidement destiné à recevoir un composant fonctionnel (12, 13, 16, 17, 18, 19).

15. Aéronef (1), comprenant :
- une structure primaire (2, 9) d'aéronef,
- une structure (10) de panneaux délimitant une cabine d'aéronef, et
- le système (3) d'isolation thermique et acoustique multifonction selon l'une quelconque des revendications 1 à 14,
le système (3) d'isolation thermique et acoustique multifonction étant reçu entre une surface interne (8) de la structure primaire (2, 9) d'aéronef et une surface (11) de structure de panneaux orientée à l'opposé de la cabine d'aéronef.
